# EUROPEAN PATENT SPECIFICATION

(11) **EP 2 711 532 B1**
(45) Date of publication and mention of the grant of the patent: **25.05.2016**
(21) Application number: 12185145.5
(22) Date of filing: 20.09.2012
(51) Int. Cl.: F02M 35/10, A62C 4/04, F02B 77/08, A62C 4/02, F02M 21/02, F02B 31/04, F02M 35/104, F02B 43/00

(54) **Internal combustion engine with flame arrestor**
Verbrennungsmotor mit Flammendurchschlagsicherung
Moteur à combustion interne avec dispositif anti-retour de flamme

(43) Date of publication of application: 26.03.2014
(73) Proprietor: Caterpillar Energy Solutions GmbH, 68167 Mannheim (DE)
(72) Inventor: Dr. Böwing, Robert, 6020 Innsbruck (AT); Braun, Michael, 69198 Schriesheim (DE); Snuis, Hans-Bernhard, 68723 Plankstadt (DE)
(74) Representative: Kramer Barske Schmidtchen Patentanwälte PartG mbB

(56) References cited:
- EP-A1- 0 044 353
- EP-A1- 1 197 646
- EP-A2- 1 008 736
- DE-A1- 10 237 596
- FR-A1- 2 905 141
- FR-A1- 2 914 695
- US-B1- 6 179 608
- US-B1- 6 752 124

## Description

### Technical Field

The present disclosure generally relates to an internal combustion engine comprising at least one flame arrestor configured to quench a flame originating from at least one cylinder of the internal combustion engine and to impart a swirl into a mixture of gaseous fuel and air to be combusted within the at least one cylinder.

### Background

Flashback within an internal combustion engine may be a catastrophic event. A flashback occurs when a flame within a combustion chamber of the internal combustion engine moves upstream from the combustion chamber towards the fuel source such as an intake manifold providing a mixture of gaseous fuels and air to the combustion chamber. In such a case, the heat of the combustion within the flame and the increase in pressure caused by the flame front have the potential to damage any structures within the mixing region for mixing fuel and air.

It is common to use flame arrestors (sometimes called flashback arrestors) comprising close coupled, non-aligned, multi-channel flame arrestor elements to quench a flame as it flashes back. In this regard, it is further known to additionally use a flame arrestor comprising at least one flame arrestor element for adding a swirl velocity component to the conventional flashback arrestor for creating an integral swirler flashback arrestor known from, for example, US 6 179 608 B1. Therein, a swirling flashback arrestor that will quench a flame front during a flashback event in a gas turbine while simultaneously providing a mixing function during normal operations is disclosed. It is further disclosed that

The present disclosure is directed, at least in part, to improving or overcoming one or more aspects of prior systems.

FR 2 914 695 relates to a device for feeding intake air into the cylinders of an internal combustion engine. The internal combustion engine has an elbow manifold inlet, from which a series of substantially aligned junctions extend. The elbow manifold inlets enhance the level of swirl of the last cylinder compared to the swirl induced into the first cylinder, so as to counteract the downward swirl.

DE 102 37 596 A1 discloses an internal combustion engine with a flame arrestor in each of the intake passages and a flame arrestor element having a first flame arrestor element and a second flame arrestor element.

### Summary of the Disclosure

According to an aspect of the present invention, an internal combustion engine comprises an intake manifold defining a flow direction of a mixture of gaseous fuel and air, at least one first cylinder fluidly connected to the intake manifold via a first branch passage at a first position, and at least one second cylinder fluidly connected to the intake manifold via a second branch passage at a second position being downstream of the first position with respect to the flow direction within intake manifold. A first flame arrestor is arranged at the first branch passage and configured to impart a first swirl into the mixture of gaseous fuel and air passing therethrough into the at least one first cylinder, and a second flame arrestor is arranged at the second branch passage and configured to impart a second swirl into the mixture of gaseous fuel and air passing therethrough into the at least one second cylinder, wherein the first swirl is smaller than the second swirl.

According to another aspect of the present disclosure, a method for operating an internal combustion engine comprising at least one first cylinder fluidly connected to an intake manifold via a first branch passage at a first position, and at least one second cylinder fluidly connected to the intake manifold via a second branch passage at a second position being downstream of the first position is disclosed. The method comprises imparting a first swirl into a mixture of gaseous fuel and air at the first position by a first flame arrestor disposed at the first branch passage, supplying the mixture of gaseous fuel and air including the first swirl into the at least one first cylinder, imparting a second swirl into the mixture of gaseous fuel and air at the second position by a second flame arrestor disposed at the second branch passage, and supplying the mixture of gaseous fuel and air including the second swirl into the at least one second cylinder, wherein the first swirl is smaller than the second swirl.

According to another aspect of the present invention, a flame arrestor comprises a housing defining a main passage having a longitudinal axis, a first flame arrestor element disposed within the housing and having flow channels arranged at a first angle with respect to the longitudinal axis, and a second flame arrestor element disposed within the housing in series with the first flame arrestor element and having flow channels arranged at a second angle with respect to the longitudinal axis. The housing further includes a first mark configured to indicate the first angle, and a second mark configured to indicate a mounting direction of the flame arrestor with respect to its use in an internal combustion engine.

In some exemplary embodiments, the first flame arrestor including a longitudinal axis may comprise a first flame arrestor element having flow channels arranged at a first angle with respect to the longitudinal axis of the first flame arrestor, and the second flame arrestor including a longitudinal axis may comprise a first flame arrestor element having flow channels arranged at a first angle with respect to the longitudinal axis of the second flame arrestor. In such exemplary embodiment the first angle of the flow channels of the first flame arrestor element of the first flame arrestor may be smaller than the first angle of the flow channels of the first flame arrestor element of the second flame arrestor.

In some exemplary embodiments, the first flame arrestor may further comprise a second flame arrestor element disposed upstream of the first flame arrestor element of the first flame arrestor, wherein the second flame arrestor element of the first flame arrestor may comprise flow channels arranged at a second angle with respect to the longitudinal axis of the first flame arrestor, and wherein the second angle of the flow channels of the second flame arrestor element of the first flame arrestor may have an opposite sign than the first angle of the flow channels of the first flame arrestor element of the first flame arrestor. Furthermore, the second flame arrestor may further comprise a second flame arrestor element disposed upstream of the first flame arrestor element of the second flame arrestor, wherein the second flame arrestor element of the second flame arrestor may comprise flow channels arranged at a second angle with respect to the longitudinal axis of the second flame arrestor, and wherein the second angle of the flow channels of the second flame arrestor element of the second flame arrestor may have an opposite sign than the first angle of the flow channels of the first flame arrestor element of the second flame arrestor.

In some exemplary embodiments, the first angle may have the same magnitude than the second angle.

In some exemplary embodiments, the first angle may have a magnitude in the range from about 0° to 40°, preferably from about 10° to 30 °. In some embodiment, the magnitude of the first angle depends on the application and the environment in which the first flame arrestor is used, especially from a swirl imparted by the inlet valve.

In some exemplary embodiments, the internal combustion engine may comprise a gas mixer being configured to mix gaseous fuel and air, and to supply the mixture of gaseous fuel and air into the intake manifold downstream of the first position.

In some exemplary embodiments, a third swirl may be imparted by the shape and geometry of the branch passages downstream of the flame arrestors. In such exemplary embodiments, the first swirl and the second swirl may have the same swirl direction as the third swirl.

In some exemplary embodiments, the first flame arrestor may be further configured to quench a flame originating from the at least one first cylinder, and the second flame arrestor may be further configured to quench a flame originating from the at least one second cylinder.

In some exemplary embodiments, the method may further comprise imparting a third swirl into the mixture of gaseous fuel and air after imparting the first swirl and the second swirl, wherein the first swirl and the second swirl may comprise the same swirl direction as the third swirl.

According to the present disclosure, a swirl (also called twist) should be understood as the radial velocity of a fluid flow, such as the combustion mixture flow. It should also be noted that the combustion mixture flow may comprise an axial velocity and a radial velocity both forming a fluid flow having a swirl. As disclosed herein, a small swirl may comprise a small radial velocity, whereas a great swirl may comprise a great radial velocity. Therefore, a small swirl may comprise a slow radial speed, whereas a great swirl may comprise a fast radial speed.

In some exemplary embodiments, the swirl may also relate to the rotation of the fluid within the combustion engine, also in the case that the fluid flow does not comprise an axial velocity, for example, at the top dead center of the bottom dead center of the piston.

Other features and aspects of this disclosure will be apparent from the following description and the accompanying drawings.

### Brief Description of the Drawings

Fig. 1 is a schematic top view of an exemplary V-type gaseous fuel internal combustion engine comprising flame arrestors for each of the cylinders;
Fig. 2 is a side cut view of a flame arrestor including two grills having spatially arranged flow channels; and
Fig. 3 is a partial cut view of the flame arrestor along a line A - A of Fig. 2.

### Detailed Description

The following is the detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of patent protection. Rather, the scope of patent protection shall be defined by the appended claims.

The present disclosure may be based in part on the realization that arranging flame arrestors having flow channels being inclined at different angles for each of the cylinders may lead to impartation of different swirls into the mixture of gaseous fuel and air supplied to each cylinder for combusting. The mixture of gaseous fuel and air supplied to the combustion chambers comprise different main swirls, which may be caused by, for example, the shape and geometry of branch passages connected to the combustion chambers. It is, therefore, desired to increase the main swirl by arranging flame arrestor at different position at the intake manifold, such that the flame arrestors also impart different swirls into the mixture of gaseous fuel and air. Thus, the mixture of gaseous fuel and air within each cylinder may comprise uniformly swirls and, thus, a better combustion within the cylinders may be achieved. A better combustion may be defined by a homogeneous combustion mixture, a higher kinetic energy of the combustion mixture, uniform temperature distribution within the cylinders, a reduced knocking tendency, and an accelerated combustion.

The present disclosure may be further based in part on the realization that using an exemplary disclosed flame arrestor having at least two flame arrestor elements comprising different flow channels with different inclinations may support in imparting a desired swirl into the mixture of gaseous fuel and air supplied to each cylinder. Furthermore, an exemplary disclosed flame arrestor may provide an additional mixing of the mixture of gaseous fuel and air and, thus, to the above-mentioned better combustion within the cylinders.

The present disclosure may be further based in part on the realization that the downstream flame arrestor element of the flame arrestor, especially the inclination of the flow channels of the downstream flame arrestor element may be proportional to the swirl imparted into the mixture of gaseous fuel and air. Therefore, dependent on the application, providing a flame arrestor element having flow channels with a small inclination may lead to a small impartation of a swirl into the mixture of gaseous fuel and air, whereas a flame arrestor element having flow channels with a greater inclination may lead to a greater impartation of a swirl into the mixture of gaseous fuel and air.

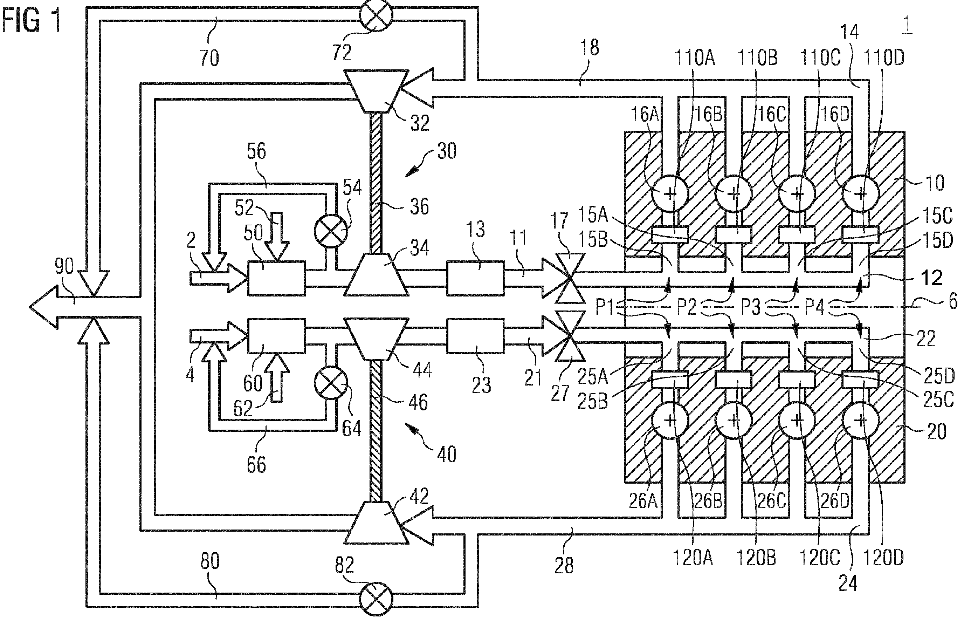

Referring now to the drawings, an exemplary embodiment of an internal combustion engine 1 is illustrated in Fig. 1. The internal combustion engine 1 may include features not shown, such as fuel systems, air systems, cooling systems, peripheries, drivetrain components etc. For the purposes of the present disclosure, the internal combustion engine 1 is considered a V-type gaseous fuel internal combustion engine. One skilled in the art will recognize, however, that the gaseous fuel internal combustion engine 1 may be any type of engine (turbine, gas, diesel, natural gas, propane, duel fuel, etc.) that would utilize a flame arrestor. Furthermore, the gaseous fuel internal combustion engine 1 may be of any size, with any number of cylinders and in any configuration ("V-in-line-radial). The internal combustion engine 1 may be used to power any machine or other device including locomotive applications, on-highway trucks or vehicles, off-highway machines, earth-moving equipment, generators, aerospace applications, marine applications, pumps, stationary equipment, or other engine-powered applications.

Exemplary embodiments of a flame arrestor for an internal combustion engine are described in the following with reference to the drawings.

With respect to Fig. 1, the internal combustion engine 1, such as a V-type-cylinder gaseous fuel engine comprises an engine block including a first cylinder bank 10 and a second cylinder bank 20, at least one fuel tank (not shown), a first turbocharger 30 associated with the first cylinder bank 10, a second turbocharger 40 associated with the second cylinder bank 20, and an air system. The engine block includes a crankcase within which a crankshaft 6 may be supported. The crankshaft 6 is indicated with a dotdashed line in Fig. 1. The crankshaft 6 is connected to pistons (not shown) that are movable within respective cylinders 16A to 16D of the first cylinder bank 10, and within respective cylinders 26A to 26D of the second cylinder bank 20 during operation of the gaseous fuel internal combustion engine 1.

A first intake manifold 12 is fluidly connected to each of the cylinders 16A to 16D of the first cylinder bank 10 via respective first branch passages 15A to 15D at different positions P1 to P4. Each of the cylinders 16A to 16D is provided with at least one inlet valve (not shown) that may be adapted to open or close the fluid connection between the first intake manifold 12 and a working chamber of the respective cylinders 16A to 16D.

A second intake manifold 22 is fluidly connected to each of the cylinders 26A to 26D of the second cylinder bank 20 via respective second branch passages 25A to 25D at different positions P1 to P4. Each of the cylinders 26A to 26D is provided with at least one inlet valve (not shown) that may be adapted to open or close the fluid connection between the second intake manifold 22 and a working chamber of the respective cylinders 26A to 26D.

The first branch passages 15A, 25A are fluidly connected to the first and second intake manifolds 12, 22 at a first position P1, respectively. The second branch passages 15B, 25B are fluidly connected to the first and second intake manifolds 12, 22 at a second position P2, respectively. The third branch passages 15C, 25C are fluidly connected to the first and second intake manifolds 12, 22 at a third position P3, respectively. The fourth branch passages 15D, 25D are fluidly connected to the first and second intake manifolds 12, 22 at a fourth position P4, respectively.

A first exhaust manifold 14 is provided, which is connected to each of the cylinders 16A to 16D of the first cylinder bank 10. Each of the cylinders 16A to 16D is provided with at least one exhaust valve (not shown) configured to open or close the fluid connection between the working chambers of the respective cylinders 16A to 16D and the first exhaust manifold 14.

A second exhaust manifold 24 is provided, which is connected to each of the cylinders 26A to 26D of the second cylinder bank 20. Each of the cylinders 26A to 26D may be provided with at least one exhaust valve (not shown), configured to open and close the fluid connection between the working chambers of the respective cylinders 26A to 26D and the second exhaust manifold 24.

As schematically illustrated in Fig. 1, the first and second intake manifolds 12, 22 are arranged within an inner portion 8 of the gaseous fuel internal combustion engine 1. The inner portion 8 may be a portion between the first cylinder bank 10 and the second cylinder bank 20 being disposed at an angle with respect to the first cylinder bank 10, thereby forming the typical V-shape. However, in some exemplary embodiments, the person skilled in the art will recognize that also the first and second exhaust manifolds 14, 24 may be arranged within the inner portion 8. In such exemplary embodiments, the first and second intake manifolds 12, 22 may be disposed at the outside of the inner portion 8.

As further illustrated in Fig. 1, each of the cylinders 16A to 16D of the first cylinder bank are provided with at least one flame arrestor 110A to 110D, and each of the cylinders 26A to 26D are provided with at least one flame arrestor 120A to 120D. The flame arrestors 110A to 110D, 120A to 120D are arranged at the first and second branch passages 15A to 15D, 25A to 25D between the respective first and second intake manifolds 12, 22 and the respective cylinders 16A to 16D, 26A to 26D. Each of the flame arrestors 110A to 110D, 120A to 120D is configured to quench any flames originating from the combustion chambers of each of the cylinders 16A to 16D, 26A to 26D, thereby preventing a flashback event.

For example, in the case of a combustion occurring too early, a flame may flash back into the first and/or second intake manifolds 12, 22. In such a case, the flame arrestors 110A to 110D, 120A to 120D quench the flame and, therefore, prevent the gaseous fuel internal combustion engine 1 from any further damage caused by the flame flashing back into the first and/or second intake manifolds 12, 22.

Generally, when the gaseous fuel internal combustion engine 1 is operated, a mixture of gaseous fuel and air (in the following referred to as "combustion mixture") is introduced into each of the cylinders 16A to 16D of the first cylinder bank 10 via the first intake manifold 12 through the flame arrestors 110A to 110D, and into each of the cylinders 26A to 26D of the second cylinder bank 20 via the second intake manifold through the flame arrestors 120A to 120B. After combustion, exhaust gases generated by the combustion process are released from the cylinders 16A to 16D, 26A to 26D through the first and second exhaust manifolds 14, 24, respectively.

The first and second turbochargers 30, 40 are applied to use the heat and pressure of the exhaust gas of the gaseous fuel of the internal combustion engine 1 to drive corresponding compressors 34, 44 for compressing the combustion mixture prior to be combusted. Specifically, the exhaust gas passing the turbines 32, 42 of the turbochargers 30, 40 rotate the turbines 32, 42, thereby decreasing in pressure and temperature. The compressors 34, 44 of the turbochargers 30, 40 are rotatable connected via common shafts 36, 46 with the turbines 32, 42 and are driven by the turbines 32, 42.

For generating the combustion mixture, a first gas mixer 50 is configured to suck in air through a first main air inlet 2 and gaseous fuel through a first fuel inlet 52. Within the gas mixer 50, the air mixes with the gaseous fuel and, subsequently, the combustion mixture is supplied to the first compressor 34.

Similarly, a second mixer 60 is configured to suck in air through a second main air inlet 4 and gaseous fuel through a second fuel inlet 62. Within the gas mixer 60, the air mixes with the gaseous fuel and, subsequently, the combustion mixture is supplied to the second compressor 44.

Generally, an outlet of the first compressor 34 is fluidly connected via a first compressor connection 11 with an inlet of the first intake manifold 12. As shown in Fig. 1, the outlet of the first compressor 34 is connected via a first cooler 13 to an inlet of the first intake manifold 12 being configured to distribute the combustion mixture to the cylinders 16A to 16D of the first cylinder bank 10.

Similarly, an outlet of the second compressor 44 is fluidly connected via a second compressor connection 21 with an inlet of the second intake manifold 22. As shown in Fig. 1, the outlet of the second compressor 44 is connected via a second cooler 23 to an inlet of the second intake manifold 22 being configured to distribute the combustion mixture to the cylinders 26A to 26D of the second cylinder bank 20.

A first throttle valve 17 arranged downstream of the first cooler 13 is configured to open or close the fluid connection between the first compressor connection 11 and the first intake manifold 12, thereby enabling or restricting the combustion mixture flow from the first compressor connection 11 to the first intake manifold 22.

A second throttle valve 27 arranged downstream of the second cooler 23 is configured to open or close the fluid connection between the second compressor connection 21 and the second intake manifold 22, thereby enabling or restricting the combustion mixture flow from the second compressor connection 21 into the second intake manifold 22.

Thus, the combustion mixture provided for the combustion process may be compressed prior to introduction into the engine cylinders 16A to 16D, 26A to 26D using the first and second turbochargers 30, 40.

During operation of the internal combustion engine 1, the combustion mixture is compressed and cooled before charging of the cylinders 16A to 16D, 26A to 26D. Within the cylinders 16A to 16D, 26A to 26D, further compression and, therefore, heating of the combustion mixture may be caused by the movement of the pistons. Then, a spark plug generates a spark for igniting the combustion mixture within the cylinders 16A to 16D, 26A to 26D. Then, the produced exhaust gases are discharged via the first and second exhaust manifolds 14, 24, respectively.

An outlet of the first exhaust manifold 14 is fluidly connected to an inlet of the first turbine 32 via a first turbine connection 18. An outlet of the turbine 32 may be fluidly connected to, for example, an exhaust gas treatment system (not shown) via an exhaust gas connection 90. In some exemplary embodiments, the exhaust gas may be directly released into the environment after passing the first turbine 32.

An outlet of the second exhaust manifold 24 is fluidly connected to an inlet of the second turbine 42 via a second turbine connection 28. An outlet of the turbine 42 may be fluidly connected to, for example, the exhaust gas treatment gas system (not shown) or, in some exemplary embodiments, directly into the environment via the exhaust gas connection 90.

The above-described cycle may be repeated continuously as long as the internal combustion engine 1 continues to run.

In some exemplary embodiments, as indicated in Fig. 1, the gaseous fuel internal combustion engine 1 may be provided with a first wastegate system comprising a wastegate connection 70 and a wastegate valve 72, and a second wastgate system including a second wastgate connection 80 and a second wastegate valve 82. Additionally, the gaseous fuel internal combustion engine 1 may include a first blow-off system including a first blow-off connection 56 and a second blow-off valve, and a second blow-off system including a second blow-off connection 66 and a second blow-off valve 64.

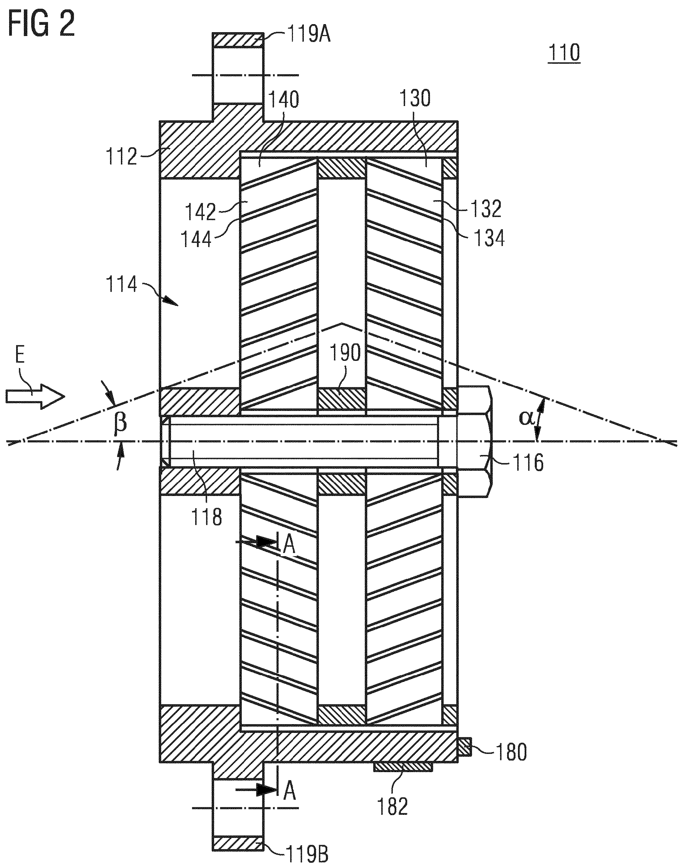

Turning now to Fig. 2, an exemplary embodiment of a flame arrestor 110 of the present disclosure is illustrated. The person skilled in the art will recognize that the exemplary flame arrestor 110 of Fig. 2 may demonstrate the principle of the flame arrestors 110A to 110D, 120A to 120D of the gaseous fuel internal combustion engine 1 of Fig. 1. Therefore, the general exemplary disclosed construction of the flame arrestor 110 of Fig. 2 also applies to the flame arrestors 110A to 110D, 120A to 120D.

Generally, the exemplary disclosed flame arrestor 110 comprises a housing 112 defining a main passage 114 through which the combustion mixture passes prior to be supplied to an associated cylinder. The main passage 114 may define a longitudinal axis 118 being substantially parallel to a flow direction of the combustion mixture, which is indicated by an arrow E.

The flame arrestor 110 comprises a first flame arrestor element 130 and a second flame arrestor element 140. The person skilled in the art will recognize that the flame arrestor 110 may also comprise only one flame arrestor element 130, or more than two flame arrestor elements.

The first flame arrestor element 130 and a second flame arrestor element 140 are disposed within the main passage 114. Specifically, the first flame arrestor element 130 is disposed downstream of the second flame arrestor element 140 with respect to the flow direction E of the combustion mixture. As indicated in Fig. 2, the first and second flame arrestor elements 130, 140 are coaxially arranged with respect to the longitudinal axis 118.

A fixing bolt 116 is configured to attach the first and second flame arrestor elements 130, 140 to the housing 112. The first and second flame arrestor elements 130, 140 as well as the housing 112 are coaxially arranged with respect to the longitudinal axis 118. The housing 112 may further include two flanges 119a, 119b for mounting the flame arrestor to a cylinder head of the gaseous fuel internal combustion engine 1. Particularly, the exemplary disclosed flame arrestors 110A to 110D, 120A to 120D may be disposed within the cylinder head and between the intake manifold and the associated cylinder.

The first flame arrestor element 130 is axially spaced apart from the second flame arrestor element 140 via a bushing 190. However, the person skilled in the art will recognize that the first flame arrestor element 130 may also directly abut the second flame arrestor element 140, thereby rendering a bushing 190 unnecessary.

The first flame arrestor element 130 includes flow channels 132 being defined by a strip 134. The flow channels 132 of the first flame arrestor element 130 are inclined at a first angle α with respect to the longitudinal axis 118.

The second flame arrestor element 140 also includes flow channels 142 being defined by a strip 144. The flow channels 142 of the second flame arrestor element 140 are inclined at a second angle β with respect to the longitudinal axis 118.

In some exemplary embodiments, the first angle α and the second angle β comprise the same magnitudes but different signs. For example, as shown in Fig. 2, the first angle α comprises a value of -20°, whereas the second angle β comprises a value of about 20°. However, in yet some exemplary embodiments, the first angle α may comprise a value of about -20°, whereas the second angle β may comprise a value of about -20°. In each exemplary embodiment, the signs of the first angle α and the second angle β shall be opposite.

Furthermore, in some exemplary embodiments, the magnitude of the fist and second angles α, β may not be identical. In such embodiments, for instance, the first angle α may comprise a value of, for example, about 30°, whereas the second angle β may comprise a value of, for example, about -20°. It should be noted that the first and second angles α, P may still include different signs. In yet some exemplary embodiment, the magnitude of the first angle α may be greater than the magnitude of the second angle β.

In some other exemplary embodiments, the second angle β may be 0°, such that the second flame arrestor element 140 does not impart any swirl into the fluid flow. In such embodiments, the second flame arrestor element 140 may be configured to align the fluid flow and, thus, to eliminate the swirl already contained in the fluid flow.

As also shown in Fig. 2, the flame arrestor 110 may comprise a first mark 180 and a second mark 182, particularly disposed at the housing, such that both the first mark 180 and the second mark 182 are visible. The first mark 180 may be configured to indicate the downstream side of the flame arrestor 110, which means that the first mark 180 may indicate the side of the flame arrestor 110 where the first flame arrestor element 130 is disposed. For example, when mounting the flame arrestor 110 into, for instance, the branch passage 15A of the internal combustion engine 1 of Fig. 1, a worker for mounting the flame arrestor 110 into the gaseous fuel internal combustion engine 1 may be guided by the first mark 180 which indicates that the side where the first mark 180 is disposed may face the associated cylinder. The first mark may be any sign indicating the direction to face the cylinder, such as an arrow, a line, or any other object to give the direction. In some exemplary embodiments, the first mark 180 may be constituted by a specific shape of the housing, which indicates the mounting direction of the flame arrestor 110 with respect to the cylinder.

The second mark 182 may be configured to indicate the first angle α of the first flame arrestor element 130. The second mark 182 may be, for example, the value of the first angle α written onto the housing. In some exemplary embodiments, the second mark 182 may be recognized by a specific shape of, for instance, the housing 112, such that the shape can indicate the first angle α.

Thus, if a desired swirl may be generated by a specific first angle α, the worker configured to mount the flame arrestor 110 may select the respective flame arrestor 110 in dependency of the second mark 182, such that the right flame arrestor 110 comprising the desired first angle α is installed into the internal combustion engine 1.

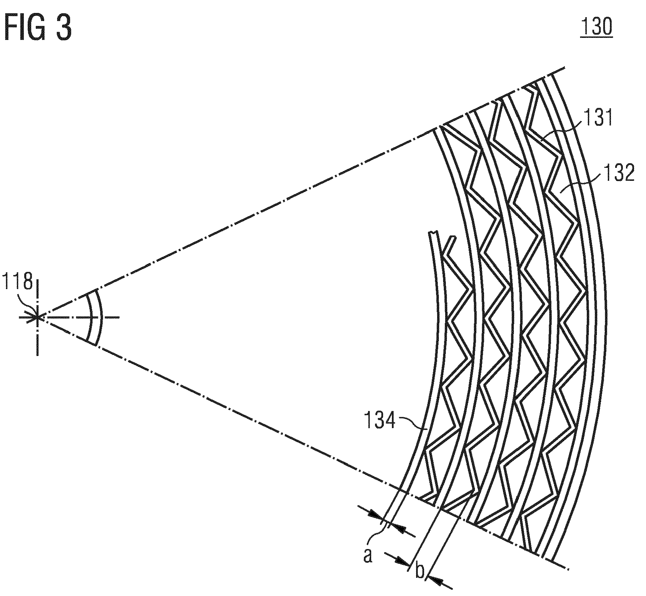

Referring to Fig. 3, a partial cut view of the first flame arrestor element 130 along a line A - A of Fig. 2 is illustrated. However, the exemplary construction of the first flame arrestor element 130 described with respect to Fig. 3 may also apply to the construction of the second flame arrestor element 140. In some exemplary embodiments, the first flame arrestor element 130 may comprise an identical construction as the second flame arrestor element 140, especially with identical first and second angles α, β. In such exemplary embodiments, the second flame arrestor element 140 may be mounted to the housing 112, such that the second angle β is opposite to the first angle α, which means that the second angle β has the opposite sign as the first angle α.

The first flame arrestor element 130 consists of the strip 134 having a smooth surface and a corrugated strip 131 wound tightly together, thereby forming a circular element with a variable diameter. In some exemplary embodiments, the first flame arrestor element 130 may comprise an oval shape, a rectangular shape, a triangular shape, or any other shape appropriate for forming a flame arrestor.

For example, KITO GmbH Braunschweig, Germany, sells exemplary flame arrestors under the name KITO flame arrestors that are manufactured having a smooth strip and a corrugated strip tightly wound together as mentioned above and shown in Fig. 3.

It is known that the gap width used in a specific flame arrester is related to a maximum experimental safe gap (MESG) of the gas mixture, but not equal to it. The MESG is defined as the maximum clearance between two parallel metal surfaces, under specified test conditions, to prevent an explosion in a test chamber from being propagated to a secondary chamber containing the same gas or vapor at the same concentration.

The smooth strip 134 may comprise a thickness a in a range from, for example, about 0.10 to 0.20 mm. By tightly winding the smooth strip 124 and the corrugated strip 131 together, the flow channels 132 may be formed. As a result of the corrugated strip 131, the flow channels 132 comprise a triangular cross-section, whereas a width b of the flow channels 132 are defined by the height of the corrugation of the corrugated strip 131. The width b of the flow channels 132 may be in a range from, for instance, about 0.20 to 0.90 mm. The width b may also be referred to as a mean diameter of the flow channels 132.

With the exemplary disclosed flame arrestor 110, it is possible to quench a flame originating the associated cylinder. In particular, the flow channels 132, 142 of the first and second flame arrestor elements 130, 140, respectively, are oppositely inclined to each other, thereby providing a kind of a barrier for the flame, which can act as a labyrinth seal. Furthermore, according to the smooth strip 134 and the corrugated strip 131 wound tightly together, the provided surface of the first and second flame arrestor elements 130, 140 can be enhanced, which may lead to a better cooling of the flame, resulting in quenching the same.

Additionally, by providing the exemplary disclosed flame arrestor 110 including the first and second flame arrestor elements 130, 140 having flow channels 132, 142 inclined with opposite angles to each other, it is possible to impart a desired swirl into the combustion mixture passing through the flame arrestor 110. Specifically, the desired imparted swirl may depend on the following parameters: the width b, the first and second angles α, β, the winding direction of the smooth strip and the corrugated strip resulting in a left swirl or right swirl, respectively, and the number of flame arrestor elements mounted to the housing of the flame arrestor

It should be noted that the winding direction of the smooth strip 134 and the corrugated strip 131 directly affects the impartation of a swirl. For example, in the case of a right winding direction of the strips 134, 131, the imparted swirl may be a right swirl, as the winding direction directly affects the first angle α. To the contrary, in the case of a left winding direction of the strips 134, 131, the imparted swirl may be a left swirl.

In yet some embodiments, a left winding direction may result in a right swirls, whereas a right winding direction may result in a left swirl. The relationship between the winding direction and the imparted swirl direction may depend on the manufacturer of the flame arrestor.

In some embodiments, the relationship between the winding direction and the imparted swirl direction may affect the sign of the first and second angles α, β with respect to the longitudinal axis 118.

As already mentioned above, for having an ideal operation of the gaseous fuel internal combustion engine 1, it is desired to have a homogenous combustion mixture within each of the cylinders 16A to 16D, 26A to 26D. A person skilled in the art will recognize, that the shape and geometry of the branch passages 15A to 15D, 25A to 25D may impart a third swirl into the combustion mixture after imparting the first and second swirls.

According to the present disclosure, the resulting swirl generated by the herein disclosed flame arrestor 110 caused by the first flame arrestor element 130 facing an associated cylinder. Particularly, the first angle α of the first flame arrestor element 130 is configured to set the desired swirl to be imparted into the combustion mixture. Therefore, the second flame arrestor element 140 disposed upstream of the first flame arrestor element 130 may be configured to merely support in quenching a flame flashing back out of the associated cylinder.

In some exemplary embodiments, the second flame arrestor element 140 may generate a swirl, which may, however, be "turned" in its direction by the first flame arrestor element 130. In this regard, the most downstream flame arrestor element may be configured to set the final swirl for the combustion mixture injected into the associated cylinder.

### Industrial Applicability

In the following, usage of the exemplary disclosed flame arrestor 110 and operation of the gaseous fuel internal combustion engine 1 is described with reference to Figs. 1 to 3.

During operation of the gaseous fuel internal combustion engine 1, the first and second gas mixers 50, 60 mix air with gaseous fuel and provide the resulting combustion mixture to the first and second compressors 34, 44. As mentioned above, the first and second gas mixers 50, 60 may already impart some swirl into the combustion mixture.

Subsequently, the combustion mixture is compressed by the first and second compressors 34, 44, respectively, and is further supplied via the first and second coolers 13, 23 into the first and second intake manifolds 12, 22, respectively. The first and second throttle valves 17, 27 are configured to control the amount of the combustion mixture entering the first and second intake manifolds 12, 22, respectively.

The skilled person will recognize that the amount of the combustion mixture at the inlet of the first and second intake manifolds 12, 22 is greater than the amount of the combustion mixture at the downstream ends of the first and second intake manifolds 12, 22, as the amount of the combustion mixture decreases by gradually supplying a desired amount of the combustion mixture to the cylinders 16A to 16D, 26A to 26D. The downstream ends of the first and second intake manifolds 12, 22 may be the ends in the vicinity of the most downstream cylinders 16D and 26D with respect to the first and second intake manifolds 12, 22.

According to the continuity equitation *Q* = *v · A* (whereas Q is the amount of the combustion mixture flowing through a cross-sectional area A of the first or second intake manifolds 12, 22, and v is the velocity of the flow of the combustion mixture), it can be derived that the velocity v decreases, when the amount Q decreases (provided that the cross-sectional area A of the first and second intake manifolds 12, 22 is constant).

As the combustion mixture amount Q at the first position P1 is greater than the combustion mixture amount Q at, for instance, the second position P2, it can be further derived that the velocity v of the combustion mixture flow at the position P1 is greater than the velocity v of the combustion mixture flow at, for instance, the position P2.

With respect to the swirl of the combustion mixture within the first and second intake manifolds 12, 22, and for having uniformly combustion mixtures within each of the cylinders 16A to 16D, 26A to 26D, it is disclosed to dispose exemplary disclosed flame arrestors 110A to 110D, 120A to 120D at the first and second branch passages 15A to 15D, 25A to 25D, wherein the flame arrestors 110A to 110D, 120A to 120D are provided with different flame arrestor elements 130, 140.

Particularly, the first element 130A of the flame arrestor 110A of the cylinder 16A comprises flow channels 132A including a first angle α being smaller than the first angle α of the flow channels 132B of the first flame arrestor element 130B of the flame arrestor 110B of the cylinder 16B. Further, the first angle α of the flow channels 132B of the first flame arrestor element 130B of the flame arrestor 110B of the cylinder 16B is smaller than the first angle α of the flow channels 132C of the first flame arrestor element 130C of the flame arrestor 110C of the cylinder 16C, which in turn is smaller than the angle α of the first flame arrestor element 130D of the flame arrestor 110D of the cylinder 16D. The same scaling applies to the first angles α of the first flame arrestor elements 130A to 130D of the flame arrestors 120A to 120D of the cylinders 26A to 26D, respectively.

The same scaling with respect to the arrangement of the flame arrestors 110A to 110D, 120A to 120D may also apply to internal combustion engines comprising less or more than four cylinders per cylinder bank.

For example, the flow channel 132A of the first flame arrestor element 130A of the flame arrestor 110A of the cylinder 16A may comprise a first angle α of 20°, the flow channel 132B of the first flame arrestor element 130B of the flame arrestor 110B of the cylinder 16B may comprise a first angle α of 25°, the flow channel 132C of the first flame arrestor element 130C of the flame arrestor 110C of the cylinder 16C may comprise a first angle α of 30°, the flow channel 132D of the first flame arrestor element 130D of the flame arrestor 110D of the cylinder 16D may comprise a first angle α of 35°. A similar scaling may apply to the flame arrestors 120A to 120D of the cylinders 26A to 26D.

It should be noted that the sign of the first angle α is dependent on the application and environment, in which the disclosed flame arrestor 110A to 110D, 120A to 120D is used. In particular, the sign of the first angle α may depend on the third swirl. In the case that the third swirl imparted by the shape and geometry of the branch passages 15A to 15D, 25A to 25D is a left swirl, it may be desired to use a flame arrestor 110 also generating a left swirl. Similarly, in the case that the third swirl is a right swirl, it may be desired to use a flame arrestor 110 generating a right swirl. In such embodiments, the first and second swirl may increase the third swirl, such that the swirl within the cylinders 16A to 16D, 26A to 26D is overall increased.

With such an arrangement of different flame arrestors having different inclinations of the flow channels, it is possible to adjust the imparted swirl for each of the cylinders as desired.

## Claims

1. An internal combustion engine (1) comprising:
an intake manifold (12, 22) defining a flow direction of a mixture of gaseous fuel and air;
at least one first cylinder (16A to 16D, 26A to 26D) fluidly connected to the intake manifold (12, 22) via a first branch passage (15A to 15D, 25A to 25D) at a first position (P1);
at least one second cylinder (16A to 16D, 26A to 26D) fluidly connected to the intake manifold (12, 22) via a second branch passage (15A to 15D, 25A to 25D) at a second position (P2), the second position (P2) being downstream of the first position (P1) with respect to the flow direction within the intake manifold (12, 22);
a first flame arrestor (110A to 110D, 120A to 120D) arranged at the first branch passage (15A to 15D, 25A to 25D) and a second flame arrestor (110A to 110D, 120A to 120D) arranged at the second branch passage (15A to 15D, 25A to 25D), **characterized in that** the first flame arrestor (110A to 110D, 120A to 120D) is configured to impart a first swirl into the mixture of gaseous fuel and air passing therethrough into the at least one first cylinder (16A to 16D, 26A to 26D); and
the second flame arrestor (110A to 110D, 120A to 120D) is configured to impart a second swirl into the mixture of gaseous fuel and air passing therethrough into the at least one second cylinder (16A to 16D, 26A to 26D), the first swirl being smaller than the second swirl.

2. The internal combustion engine (1) of claim 1, wherein
the first flame arrestor (110A to 110D, 120A to 120D) including a longitudinal axis (118) comprises a first flame arrestor element (130) having flow channels (132) arranged at a first angle (α) with respect to the longitudinal axis (118) of the first flame arrestor (110A to 110D, 120A to 120D), and
the second flame arrestor (110A to 110D, 120A to 120D) including a longitudinal axis (118) comprises a first flame arrestor element (130) having flow channels (132) arranged at a first angle (α) with respect to the longitudinal axis (118) of the second flame arrestor (110A to 110D, 120A to 120D), and
the first angle (α) of the flow channels (132) of the first flame arrestor element (130) of the first flame arrestor (110A to 110D, 120A to 120D) is smaller than the first angle (α) of the flow channels (132) of the first flame arrestor element (130) of the second flame arrestor (110A to 110D, 120A to 120D).

3. The internal combustion engine (1) of claim 2, wherein
the first flame arrestor (110A to 110D, 120A to 120D) further comprises a second flame arrestor element (140) disposed upstream of the first flame arrestor element (130) of the first flame arrestor (110A to 110D, 120A to 120D), the second flame arrestor element (140) of the first flame arrestor (110A to 110D, 120A to 120D) comprises flow channels (142) arranged at a second angle (β) with respect to the longitudinal axis (118) of the first flame arrestor (110A to 110D, 120A to 120D), the second angle (β) of the flow channels (142) of the second flame arrestor element (140) of the first flame arrestor (1110A to 110D, 120A to 120D) having an opposite sign than the first angle (α) of the flow channels (132) of the first flame arrestor element (130) of the first flame arrestor (110A to 110D, 120A to 120D), and
the second flame arrestor (110A to 110D, 120A to 120D) further comprises a second flame arrestor element (140) disposed upstream of the first flame arrestor element (130) of the second flame arrestor (110A to 110D, 120A to 120D), the second flame arrestor element (140) of the second flame arrestor (110A to 110D, 120A to 120D) comprises flow channels (142) arranged at a second angle (β) with respect to the longitudinal axis (118) of the second flame arrestor (110A to 110D, 120A to 120D), the second angle (β) of the flow channels (142) of the second flame arrestor element (140) of the second flame arrestor (110A to 110D, 120A to 120D) having an opposite sign than the first angle (α) of the flow channels (132) of the first flame arrestor element (130) of the second flame arrestor (110A to 110D, 120A to 120D).

4. The internal combustion engine (1) of any one of claims 2 or 3, wherein the first angle (α) has the same magnitude than the second angle (β).

5. The internal combustion engine (1) of any one of claims 2 to 4, wherein the first angle (α) has a magnitude in the range from about 0° to 40°, preferably from about 10° to 30 °.

6. The internal combustion engine (1) of any one of claims 3 to 5, wherein the second angle (β) has a magnitude in the range from about 0° to 40°, preferably from about 10° to 30 °.

7. The internal combustion engine (1) of any one of the preceding claims, wherein the shape and geometry of the first and second branch passages (15A to 15D, 25A to 25D) are configured to impart a third swirl into the mixture of gaseous fuel and air supplied to the cylinders (16A to 16D, 26A to 26D) downstream of the first and second flame arrestors (110A to 110D, 120A to 120D).

8. The internal combustion engine (1) of claim 7, wherein the first swirl and the second swirl have the same swirl direction as the third swirl.

9. The internal combustion engine (1) of any one of the preceding claims, wherein
the first flame arrestor (110A to 110D, 120A to 120D) is further configured to quench a flame originating from the at least one first cylinder (16A to 16D, 26A to 26D), and
the second flame arrestor (110A to 110D, 120A to 120D) is further configured to quench a flame originating from the at least one second cylinder (16A to 16D, 26A to 26D).

10. The internal combustion engine (1) of any one of the preceding claims, wherein the internal combustion engine (1) is a V-type gaseous fuel internal combustion engine comprising a first cylinder bank (10) and a second cylinder bank (20).

11. A method for operating an internal combustion engine (1) comprising at least one first cylinder (16A to 16D, 26A to 26D) fluidly connected to an intake manifold (12, 22) via a first branch passage (15A to 15D, 25A to 25D) at a first position (P1), and at least one second cylinder (16A to 16D, 26A to 26D) fluidly connected to the intake manifold (12, 22) via a second branch passage (15A to 15D, 25A to 25D) at a second position (P2) being downstream of the first position (P1), the method comprising:
imparting a first swirl into a mixture of gaseous fuel and air at the first position (P1) by a first flame arrestor (110A to 110D, 120A to 120D) disposed at the first branch passage (15A to 15D, 25A to 25D);
supplying the mixture of gaseous fuel and air including the first swirl into the at least one first cylinder (16A to 16D, 26A to 26D);
imparting a second swirl into the mixture of gaseous fuel and air at the second position (P2) by a second flame arrestor (110A to 110D, 120A to 120D) disposed at the second branch passage (15A to 15D, 25A to 25D); and
supplying the mixture of gaseous fuel and air including the second swirl into the at least one second cylinder (16A to 16D, 26A to 26D), the first swirl being smaller than the second swirl.

12. The method of claim 11, further comprising imparting a third swirl into the mixture of gaseous fuel and air by the shape and geometry of the first and second branch passages (15A to 15D, 25A to 25D) after imparting the first swirl and second swirl, wherein the first swirl and second swirl comprise the same swirl direction as the third swirl.

13. The method of any one of claims 11 and 12, further comprising quenching a flame originating from the at least one first cylinder (16A to 16D, 26A to 26D) at the first position (P1), and quenching a flame originating from the at least one second cylinder (16A to 16D, 26A to 26D) at the second position (P2).

## Patentansprüche

1. Verbrennungskraftmaschine (1) mit:
einer Einlasssammelleitung (12, 22), die eine Strömungsrichtung eines Luft-Gaskraftstoffgemischs definiert,
mindestens einem ersten Zylinder (16A bis 16D, 26A bis 26D), der in Fluidverbindung mit der Einlasssammelleitung (12, 22) über eine erste Abzweigungsleitung (15A bis 15D, 25A bis 25D) an einer ersten Position (P1) ist,
mindestens einem zweiten Zylinder (16A bis 16D, 26A bis 26D), der in Fluidverbindung mit der Einlasssammelleitung (12, 22) über eine zweite Abzweigungsleitung (15A bis 15D, 25A bis 25D) an einer zweiten Position (P2) ist, wobei die zweite Position (P2) stromabwärts von der ersten Position (P1) bezüglich der Strömungsrichtung innerhalb der Einlasssammelleitung (12, 22) ist,
einer ersten Flammensperre (110A bis 110D, 120A bis 120D), die an der ersten Abzweigungsleitung (15A bis 15D, 25A bis 25D) angeordnet ist, und einer zweiten Flammensperre (110A bis 110D, 120A bis 120D), die an der zweiten Abzweigungsleitung (15A bis 15D, 25A bis 25D) angeordnet ist, **dadurch gekennzeichnet, dass** die erste Flammensperre (110A bis 110D, 120A bis 120D) dazu ausgebildet ist, dem durch diese in den mindestens einen ersten Zylinder (16A bis 16D, 26A bis 26D) strömenden Luft-Gaskraftstoffgemisch einen ersten Drall zu vermitteln, und die zweite Flammensperre (110A bis 110D, 120A bis 120D) dazu ausgebildet ist, dem durch diese in den mindestens einen zweiten Zylinder (16A bis 16D, 26A bis 26D) strömenden Luft-Gaskraftstoffgemisch einen zweiten Drall zu vermitteln, wobei der erste Drall kleiner als der zweite Drall ist.

2. Verbrennungskraftmaschine (1) nach Anspruch 1, wobei
die erste Flammensperre (110A bis 110D, 120A bis 120D), die eine Längsachse (118) aufweist, ein erstes Flammensperrenelement (130) mit Strömungskanälen (132), die in einem ersten Winkel (α) bezüglich der Längsachse (118) der ersten Flammensperre (110A bis 110D, 120A bis 120D) angeordnet sind, aufweist und
die zweite Flammensperre (110A bis 110D, 120A bis 120D), die eine Längsachse (118) aufweist, ein erstes Flammensperrenelement (130) mit Strömungskanälen (132), die in einem ersten Winkel (α) bezüglich der Längsachse (118) der zweiten Flammensperre (110A bis 110D, 120A bis 120D) angeordnet sind, aufweist und
der erste Winkel (α) der Strömungskanäle (132) des ersten Flammensperrenelements (130) der ersten Flammensperre (110A bis 110D, 120A bis 120D) kleiner als der erste Winkel (α) der Strömungskanäle (132) des ersten Flammensperrenelements (130) der zweiten Flammensperre (110A bis 110D, 120A bis 120D) ist.

3. Verbrennungskraftmaschine (1) nach Anspruch 2, wobei
die erste Flammensperre (110A bis 110D, 120A bis 120D) ferner ein zweites Flammensperrenelement (140) aufweist, das stromaufwärts von dem ersten Flammensperrenelement (130) der ersten Flammensperre (110A bis 110D, 120A bis 120D) vorgesehen ist, das zweite Flammensperrenelement (140) der ersten Flammensperre (110A bis 110D, 120A bis 120D) Strömungskanäle (142) aufweist, die in einem zweiten Winkel (β) bezüglich der Längsachse (118) der ersten Flammensperre (110A bis 110D, 120A bis 120D) angeordnet sind, der zweite Winkel (β) der Strömungskanäle (142) des zweiten Flammensperrenelements (140) der ersten Flammensperre (110A bis 110D, 120A bis 120D) ein umgekehrtes Vorzeichen gegenüber dem ersten Winkel (α) der Strömungskanäle (132) des ersten Flammensperrenelements (130) der ersten Flammensperre (110A bis 110D, 120A bis 120D) aufweist, und
die zweite Flammensperre (110A bis 110D, 120A bis 120D) ferner ein zweites Flammensperrenelement (140) aufweist, das stromaufwärts von dem ersten Flammensperrenelement (130) der zweiten Flammensperre (110A bis 110D, 120A bis 120D) vorgesehen ist, das zweite Flammensperrenelement (140) der zweiten Flammensperre (110A bis 110D, 120A bis 120D) Strömungskanäle (142) aufweist, die in einem zweiten Winkel (β) bezüglich der Längsachse (118) der zweiten Flammensperre (110A bis 110D, 120A bis 120D) angeordnet sind, der zweite Winkel (β) der Strömungskanäle (142) des zweiten Flammensperrenelements (140) der zweiten Flammensperre (110A bis 110D, 120A bis 120D) ein umgekehrtes Vorzeichen gegenüber dem ersten Winkel (α) der Strömungskanäle (132) des ersten Flammensperrenelements (130) der zweiten Flammensperre (110A bis 110D, 120A bis 120D) aufweist.

4. Verbrennungskraftmaschine (1) nach Anspruch 2 oder 3, wobei der erste Winkel (α) den gleichen Betrag wie der zweite Winkel (β) aufweist.

5. Verbrennungskraftmaschine (1) nach einem der Ansprüche 2 bis 4, wobei der erste Winkel (α) einen Betrag in dem Bereich von ungefähr 0° bis 40°, vorzugsweise von ungefähr 10° bis 30°, aufweist.

6. Verbrennungskraftmaschine (1) nach einem der Ansprüche 3 bis 5, wobei der zweite Winkel (β) einen Betrag in dem Bereich von ungefähr 0° bis 40°, vorzugsweise von ungefähr 10° bis 30°, aufweist.

7. Verbrennungskraftmaschine (1) nach einem der vorherigen Ansprüche, wobei die Form und Geometrie der ersten und zweiten Abzweigungsleitung (15A bis 15D, 25A bis 25D) dazu ausgebildet sind, einen dritten Drall an das Luft-Gaskraftstoffgemisch, das zu den Zylindern (16A bis 16D, 26A bis 26D) zugeführt wird, stromabwärts von der ersten und zweiten Flammensperre (110A bis 110D, 120A bis 120D) zu vermitteln.

8. Verbrennungskraftmaschine (1) nach Anspruch 7, wobei der erste Drall und der zweite Drall die gleiche Drallrichtung wie der dritte Drall aufweisen.

9. Verbrennungskraftmaschine (1) nach einem der vorherigen Ansprüche, wobei
die erste Flammensperre (110A bis 110D, 120A bis 120D) ferner dazu ausgebildet ist, eine Flamme, die von dem mindestens einem ersten Zylinder (16A bis 16D, 26A bis 26D) stammt, zu ersticken und
die zweite Flammensperre (110A bis 110D, 120A bis 120D) ferner dazu ausgebildet ist, eine Flamme, die von dem mindestens einem zweiten Zylinder (16A bis 16D, 26A bis 26D) stammt, zu ersticken.

10. Verbrennungskraftmaschine (1) nach einem der vorherigen Ansprüche, wobei die Verbrennungskraftmaschine (1) eine V-Typ-Gaskraftstoffverbrennungskraftmaschine mit einer ersten Zylinderreihe (10) und einer zweiten Zylinderreihe (20) ist.

11. Verfahren zum Betreiben einer Verbrennungskraftmaschine (1) mit mindestens einem ersten Zylinder (16A bis 16D, 26A bis 26D), der mit einer Einlasssammelleitung (12, 22) über eine erste Abzweigungsleitung (15A bis 15D, 25A bis 25D) an einer ersten Position (P1) in Fluidverbindung ist, und mindestens einem zweiten Zylinder (16A bis 16D, 26A bis 26D), der mit der Einlasssammelleitung (12, 22) über eine zweite Abzweigungsleitung (15A bis 15D, 25A bis 25D) an einer zweiten Position (P2), die stromabwärts von der ersten Position (P1) ist, in Fluidverbindung ist, wobei das Verfahren aufweist:
Vermitteln eines ersten Dralls an ein Luft-Gaskraftstoffgemisch an der ersten Position (P1) durch eine erste Flammensperre (110A bis 110D, 120A bis 120D), die an der ersten Abzweigungsleitung (15A bis 15D, 25A bis 25D) vorgesehen ist,
Zuführen des Luft-Gaskraftstoffgemischs mit dem ersten Drall in den mindestens einen ersten Zylinder (16A bis 16D, 26A bis 26D),
Vermitteln eines zweiten Dralls an das Luft-Gaskraftstoffgemisch an der zweiten Position (P2) durch eine zweite Flammensperre (110A bis 110D, 120A bis 120D), die an der zweiten Abzweigungsleitung (15A bis 15D, 25A bis 25D) vorgesehen ist, und
Zuführen des Luft-Gaskraftstoffgemischs mit dem zweiten Drall in den mindestens einen zweiten Zylinder (16A bis 16D, 26A bis 26D), wobei der erste Drall kleiner ist als der zweite Drall.

12. Verfahren nach Anspruch 11, ferner aufweisend Vermitteln eines dritten Dralls an das Luft-Gaskraftstoffgemisch durch die Form und Geometrie der ersten und zweiten Abzweigungsleitung (15A bis 15D, 25A bis 25D) nach dem Vermitteln des ersten Drall und des zweiten Dralls, wobei der erste Drall und der zweite Drall die gleiche Drallrichtung wie der dritte Drall aufweisen.

13. Verfahren nach Anspruch 11 oder 12, ferner aufweisend Ersticken einer Flamme, die von dem mindestens einen ersten Zylinder (16A bis 16D, 26A bis 26D) stammt, an der ersten Position (P1), und Ersticken einer Flamme, die von dem mindestens einen zweiten Zylinder (16A bis 16D, 26A bis 26D) stammt, an der zweiten Position (P2).

## Revendications

1. Moteur à combustion interne (1) comprenant :
une tubulure d'admission (12, 22) définissant une direction d'écoulement d'un mélange d'air et de combustible gazeux ;
au moins un premier cylindre (16A à 16D, 26A à 26D) raccordé fluidiquement à la tubulure d'admission (12, 22) par le biais d'un premier passage de bifurcation (15A à 15D, 25A à 25D) dans une première position (P1) ;
au moins un second cylindre (16A à 16D, 26A à 26D) raccordé fluidiquement à la tubulure d'admission (12, 22) par le biais d'un second passage de bifurcation (15A à 15D, 25A à 25D) dans une seconde position (P2), la seconde position (P2) se trouvant en aval de la première position (P1) par rapport à la direction d'écoulement dans la tubulure d'admission (12, 22) ;
un premier pare-flammes (110A à 110D, 120A à 120D) agencé au niveau du premier passage de bifurcation (15A à 15D, 25A à 25D) et un second pare-flammes (110A à 110D, 120A à 120D) agencé au niveau du second passage de bifurcation (15A à 15D, 25A à 25D), **caractérisé en ce que** le premier pare-flammes (110A à 110D, 120A à 120D) est configuré pour conférer un premier tourbillon dans le mélange d'air et de combustible gazeux passant à travers celui-ci dans l'au moins un premier cylindre (16A à 16D, 26A à 26D) ; et
le second pare-flammes (110A à 110D, 120A à 120D) est configuré pour conférer un deuxième tourbillon dans le mélange d'air et de combustible gazeux passant à travers celui-ci dans l'au moins un second cylindre (16A à 16D, 26A à 26D), le premier tourbillon étant plus petit que le deuxième tourbillon.

2. Moteur à combustion interne (1) selon la revendication 1, dans lequel
le premier pare-flammes (110A à 110D, 120A à 120D) incluant un axe longitudinal (118) comprend un premier élément de pare-flammes (130) ayant des canaux d'écoulement (132) agencés selon un premier angle (α) par rapport à l'axe longitudinal (118) du premier pare-flammes (110A à 110D, 120A à 120D), et
le second pare-flammes (110A à 110D, 120A à 120D) incluant un axe longitudinal (118) comprend un premier élément de pare-flammes (130) ayant des canaux d'écoulement (132) agencés selon un premier angle (α) par rapport à l'axe longitudinal (118) du second pare-flammes (110A à 110D, 120A à 120D), et
le premier angle (α) des canaux d'écoulement (132) du premier élément de pare-flammes (130) du premier pare-flammes (110A à 110D, 120A à 120D) est plus petit que le premier angle (α) des canaux d'écoulement (132) du premier élément de pare-flammes (130) du second pare-flammes (110A à 110D, 120A à 120D).

3. Moteur à combustion interne (1) selon la revendication 2, dans lequel
le premier pare-flammes (110A à 110D, 120A à 120D) comprend en outre un second élément de pare-flammés (140) disposé en amont du premier élément de pare-flammes (130) du premier pare-flammes (110A à 110D, 120A à 120D), le second élément de pare-flammes (140) du premier pare-flammes (110A à 110D, 120A à 120D) comprend des canaux d'écoulement (142) agencés selon un second angle (ß) par rapport à l'axe longitudinal (118) du premier pare-flammes (110A à 110D, 120A à 120D), le second angle (ß) des canaux d'écoulement (142) du second élément de pare-flammes (140) du premier pare-flammes (110A à 110D, 120A à 120D) ayant un signe opposé par rapport au premier angle (α) des canaux d'écoulement (132) du premier élément de pare-flammes (130) du premier pare-flammes (110A à 110D, 120A à 120D), et
le second pare-flammes (110A à 110D, 120A à 120D) comprend en outre un second élément de pare-flammes (140) disposé en amont du premier élément de pare-flammes (130) du second pare-flammes (110A à 110D, 120A à 120D), le second élément de pare-flammes (140) du second pare-flammes (110A à 110D, 120A à 120D) comprend des canaux d'écoulement (142) agencés selon un second angle (ß) par rapport à l'axe longitudinal (118) du second pare-flammes (110A à 110D, 120A à 120D), le second angle (ß) des canaux d'écoulement (142) du second élément de pare-flammes (140) du second pare-flammes (110A à 110D, 120A à 120D) ayant un signe opposé par rapport au premier angle (α) des canaux d'écoulement (132) du premier élément de pare-flammes (130) du second pare-flammes (110A à 110D, 120A à 120D).

4. Moteur à combustion interne (1) selon l'une quelconque des revendications 2 ou 3, dans lequel le premier angle (α) a la même amplitude que le second angle (ß).

5. Moteur à combustion interne (1) selon l'une quelconque des revendications 2 à 4, dans lequel le premier angle (α) a une amplitude située dans la plage d'environ 0 ° à 40 °, de préférence entre environ 10 ° à 30 °.

6. Moteur à combustion interne (1) selon l'une quelconque des revendications 3 à 5, dans lequel le second angle (ß) a une amplitude située dans la plage d'environ 0 ° à 40 °, de préférence entre environ 10 ° à 30 °.

7. Moteur à combustion interne (1) selon l'une quelconque des revendications précédentes, dans lequel la forme et la géométrie des premier et second passages de bifurcation (15A à 15D, 25A à 25D) sont configurées pour conférer un troisième tourbillon dans le mélange d'air et de combustible gazeux apporté aux cylindres (16A à 16D, 26A à 26D) en aval des premier et deuxième (110A à 110D, 120A à 120D).

8. Moteur à combustion interne (1) selon la revendication 7, dans lequel le premier tourbillon et le deuxième tourbillon ont la même direction de tourbillon que le troisième tourbillon.

9. Moteur à combustion interne (1) selon l'une quelconque des revendications précédentes, dans lequel
le premier pare-flammes (110A à 110D, 120A à 120D) est en outre configuré pour éteindre une flamme provenant de l'au moins un premier cylindre (16A à 16D, 26A à 26D), et
le second pare-flammes (110A à 110D, 120A à 120D) est en outre configuré pour éteindre une flamme provenant de l'au moins un second cylindre (16A à 16D, 26A à 26D).

10. Moteur à combustion interne (1) selon l'une quelconque des revendications précédentes, dans lequel le moteur à combustion interne (1) est un moteur à combustion interne à combustible gazeux de type V comprenant une première rangée de cylindres (10) et une seconde rangée de cylindres (20).

11. Procédé pour faire fonctionner un moteur à combustion interne (1) comprenant au moins un premier cylindre (16A à 16D, 26A à 26D) raccordé fluidiquement à une tubulure d'admission (12, 22) par le biais d'un premier passage de bifurcation (15A à 15D, 25A à 25D) dans une première position (P1), et au moins un second cylindre (16A à 16D, 26A à 26D) raccordé fluidiquement à la tubulure d'admission (12, 22) par le biais d'un second passage de bifurcation (15A à 15D, 25A à 25D) dans une seconde position (P2) se trouvant en aval de la première position (P1), le procédé comprenant
la transmission d'un premier tourbillon dans un mélange d'air et de combustible gazeux dans la première position (P1) par un premier pare-flammes (110A à 110D, 120A à 120D) disposé au niveau du premier passage de bifurcation (15A à 15D, 25A à 25D) ;
l'acheminement du mélange d'air et de combustible gazeux incluant le premier tourbillon dans l'au moins un premier cylindre (16A à 16D, 26A à 26D) ;
la transmission d'un deuxième tourbillon dans un mélange d'air et de combustible gazeux dans la deuxième position (P2) par un deuxième pare-flammes (110A à 110D, 120A à 120D) disposé au niveau du second passage de bifurcation (15A à 15D, 25A à 25D) ; et
l'acheminement du mélange d'air et de combustible gazeux incluant le deuxième tourbillon dans l'au moins un second cylindre (16A à 16D, 26A à 26D), le premier tourbillon étant plus petit que le deuxième tourbillon.

12. Procédé selon la revendication 11, consistant en outre à conférer un troisième tourbillon dans le mélange d'air et de combustible gazeux par la forme et la géométrie des premier et second passages de bifurcation (15A à 15D, 25A à 25D) après avoir conféré le premier tourbillon et le deuxième tourbillon, dans lequel le premier tourbillon et le deuxième tourbillon comprennent la même direction de tourbillon que le troisième tourbillon.

13. Procédé selon l'une quelconque des revendications 11 et 12, consistant en outre à éteindre une flamme provenant de l'au moins un premier cylindre (16A à 16D, 26A à 26D) dans la première position (P1) et à éteindre une flamme provenant de l'au moins un second cylindre (16A à 16D, 26A à 26D) dans la seconde position (P2).
